# EUROPÄISCHE PATENTANMELDUNG

(11) **EP 0 916 398 A1**
(43) Veröffentlichungstag der Anmeldung: **19.05.1999**
(21) Anmeldenummer: 98120867.1
(22) Anmeldetag: 03.11.1998
(51) Int. Cl.: B01J 19/12, G01N 1/44

(54) **Vorrichtung zum Auslösen und/oder Fördern chemischer Prozesse durch Bestrahlung eines Ausgangsstoffs mit elektromagnetischen Wellen**

(30) Priorität: 03.11.1997 DE 19748520
(71) Anmelder: Mikrowellen-Systeme MWS GmbH, 7240 Küblis (CH)
(72) Erfinder: Lautenschläger, Werner, 88299 Leutkirch (DE)
(74) Vertreter: Schmidt-Evers, Jürgen, Dipl.-Ing.

(57) **Zusammenfassung**

Bei einer Vorrichtung zum Auslösen und/oder Fördern chemischer Prozesse durch Bestrahlung eines Ausgangsstoffs (7) mit elektromagnetischen Wellen, mit wenigstens einem von einer Wandung umgebenen Aufnahmeraum (6a) für den Ausgangsstoff (7), einer ersten Strahlungsquelle (5), die den Aufnahmeraum (6) mit einer vorzugsweise langwellige elektromagnetische Wellen aufweisenden ersten Strahlung (5a) bestrahlt, einer zweiten Strahlungsquelle (8), die den Aufnahmeraum (6a) mit einer kurzwellige elektromagnetische Wellen enthaltenden zweiten Strahlung (8a) bestrahlt, und einer elektrischen Steuereinrichtung zum Steuern der Vorrichtung (1), wobei die zweite Strahlungsquelle (8) im Aufnahmeraum (6a) angeordnet ist.

## Beschreibung

Es ist bekannt, chemische Prozesse dadurch auszulösen oder zu fördern, daß ein in einem Aufnahmeraum befindlicher Ausgangsstoff mit langwelligen elektromagnetischen Wellen, wie z:B. Mikrowellen, oder kurzwelligen elektromagnetischen Wellen, wie z.B. ultraviolettes Licht (UV) oder Infrarotlicht (IR) bestrahlt werden. Beide Bestrahlungsmaßnahmen können aufgrund ihrer unterschiedlichen Wirkungsweisen ganz spezifische Einsatzbereiche haben, wobei allerdings auch Bereichsüberlappungen vorkommen. Ein wesentliches Merkmal ist, ob der chemische Prozeß im Ausgangsstoff bei Normaltemperatur oder bei erhöhter Temperatur stattfinden soll. Dabei ist zu berücksichtigen, daß eine Bestrahlung langwelligen elektromagnetischen Wellen zu einer erhöhten Temperatur im zu bestrahlenden Ausgangsstoff führt, wenn dieser die langwelligen elektromagnetischen Wellen absorbiert. Eine Bestrahlung mit kurzwelligen elektromagnetischen Wellen kann dagegen bei einer Normaltemperatur im Ausgangsstoff oder bei einer nur vernachlässigbar geringen Temperaturerhöhung oder einer geringen Temperaturerhöhung erfolgen. Eine langwellige elektromagnetische Bestrahlung wird z.B. dann gewählt, wenn der zu behandelnde Ausgangsstoff bei erhöhter Temperatur aufgeschlossen werden soll, wie es in vielen Fällen bei einer Stoffanalyse erforderlich ist. Eine Bestrahlung mit kurzwelligen elektromagnetischen Wellen kann dagegen bei niedriger Temperatur oder Normal- bzw. Raumtemperatur erfolgen. Ein Bestrahlung mit UV-Licht eignet sich z.B. gut zum Abtöten von Keimen zwecks Sterilisation.

Eine Vorrichtung der eingangs angegebenen Art ist in der EP-B-0 429 814 beschrieben. Bei dieser bekannten Vorrichtung ist eine erste Strahlungsquelle vorgesehen zur Erzeugung und Einkopplung einer langwellige elektromagnetische Wellen wie Mikrowellen aufweisenden ersten Strahlung in einen ersten Bestrahlungsraum, in dem sich ein topfförmiger Aufnahmebehälter für den zu bestrahlenden Ausgangsstoff befindet. Außerdem ist in dem ersten Bestrahlungsraum eine zweite Strahlungsquelle zum Erzeugen von kurzwelligen elektromagnetischen Wellen, z.B. UV-Licht, in Form eines Gasreaktionsrohres in Ringform vorgesehen, der den Aufnahmebehälter umgibt. Das Gasreaktionsrohr ist bei Unterdruck mit einem Gas gefüllt, welches beim Bestrahlen mit der langwelligen ersten Strahlung diese absorbiert, wodurch die zweite Strahlung erzeugt wird, wobei bei einer niedrigen Leistung der ersten Strahlungsquelle der Ausgangsstoff im wesentlichen ohne Erwärmung bestrahlt werden kann und bei einer hohen Leistung der ersten Strahlungsquelle der Ausgangsstoff bei erhöhter Temperatur bestrahlt werden kann.

Bei dieser bekannten Vorrichtung ist die zweite Strahlungsquelle in Ringform ausgebildet, wobei sie den Aufnahmebehälter mit dem darin befindlichen Ausgangsstoff ringförmig umgibt.

Der Erfindung liegt die Aufgabe zugrunde, bei einer Vorrichtung der eingangs angegebenen Art die Leistungsfähigkeit der Vorrichtung oder die Bestrahlung, insbesondere hinsichtlich der zweiten Strahlung, zu verbessern.

Diese Aufgabe wird durch die Merkmale des Anspruchs 1 gelöst.

Bei der erfindungsgemäßen Ausgestaltung ist die zweite Strahlungsquelle wenigstens teilweise im Aufnahmebehälter angeordnet. Hierdurch ist die zweite Strahlungsquelle in der Lage, das Ausgangsmaterial mit direktem oder indirektem Kontakt zu bestrahlen und zwar von innen nach außen. Dabei kann die zweite Strahlungsquelle sich über dem Ausgangsstoff oder sich wenigstens teilweise im Ausgangsstoff befinden, wobei sie darin völlig untertauchen kann oder insbesondere als aufrechter länglicher Körper, mit einem unteren Abschnitt in das Ausgangsmaterial eintauchen und mit einem oberen Abschnitt aus dem Ausgangsstoff oder aus dem Aufnahmebehälter nach oben herausragen kann. Es zeigt sich bei der erfindungsgemäßen Ausgestaltung, daß eine Bestrahlung des Ausgangsstoffs von innen nach außen verlustarmer und somit leistungsfähiger durchgeführt werden kann, da die zur Verfügung stehende Strahlungsleistung besser ausgenutzt werden kann.

Die zweite Strahlungsquelle kann durch einen Plasma-Strahler gebildet sein, der eine kurzwellige Wellen aufweisende Strahlung abgibt, z.B. IR- oder vorzugsweise UV-Licht.

Es ist im weiteren im Rahmen der Erfindung möglich, eine zweite Strahlungsquelle zu verwenden, die ihre zweite Strahlung unabhängig von der ersten Strahlungsquelle erzeugt und für diesen Zweck eine eigene Energieversorgung aufweist, oder die in ihrer Funktion von der ersten Strahlungsquelle und deren erste Strahlung abhängig ist. Im letzteren Fall eignet sich als zweite Strahlungsquelle ein sogenanntes Gasreaktionsrohr, das bei Unterdruck mit einem Gas gefüllt ist und dann, wenn es von der ersten Strahlung bestrahlt wird, die zweite Strahlung abgibt. Im Rahmen der Erfindung kann es sich bei der ersten Strahlung um eine solche mit vorzugsweise langwelligen elektromagnetischen Wellen, insbesondere Mikrowellen, handeln.

Die erste Strahlungsquelle kann so ausgebildet und gesteuert sein, daß sie bei geringer Strahlungsleistung im wesentlichen vollständig von dem unter Druck stehenden Gas im Gasreaktionsrohr absorbiert wird, wobei durch die dadurch erzeugte zweite Strahlung der Ausgangsstoff im wesentlichen erwärmungsfrei bestrahlt wird, wobei bei höheren Strahlungsleistungen entsprechende Anteile der ersten Strahlung, z.B. durch das unter Druck stehende Gas im Gasreaktionsrohr hindurch, zum Ausgangsstoff gelangen und eine entsprechende Erwärmung des Ausgangsstoffs herbeiführen.

Es ist im weiteren im Rahmen der Erfindung möglich und vorteilhaft, die erfindungsgemäße Vorrichtung als eine Durchflußvorrichtung auszubilden, bei der der feste und/oder flüssige und/oder gasförmige zu bestrahlende Ausgangsstoff die Vorrichtung in einem einen Aufnahmeraum für den Ausgangsstoff bildenden Durchflußrohr durchströmt und dabei der ersten Strahlung und der zweiten Strahlung ausgesetzt wird, oder die Vorrichtung kann auch einen topfförmigen Aufnahmebehälter aufweisen, dessen Hohlraum den Aufnahmeraum für den Ausgangsstoff bildet, in dem sich der Ausgangsstoff nach seiner Einfüllung während der Bestrahlung befindet und nach der Bestrahlung entnommen werden kann.

Bei allen erfindungsgemäßen Lösungen ist der zu bestrahlende Ausgangsstoff von der Strahlungsquelle lediglich durch deren Wandung getrennt. Dabei kann die zweite Strahlungsquelle und/oder der Aufnahmeraum für den zu bestrahlenden Ausgangsstoff so groß bemessen sein, daß der Aufnahmeraum durch einen die zweite Strahlungsquelle umgebenden Ringraum einer nur so großen Ringbreite gebildet wird, daß der in diesem Ringraum angeordnete Ausgangsstoff im Sinne einer verhältnismäßig dünnen Schicht angeordnet ist, die auch bei verhältnismäßig geringer Strahlungsintensität der zweiten Strahlungsquelle leistungsstark bestrahlt werden kann.

Des weiteren ist es im Rahmen der Erfindung möglich, den Aufnahmeraum als Durchflußleitung so lang auszubilden, daß der Ausgangsstoff in einem Durchgang hinreichend bestrahlt werden kann. Es ist im Rahmen der Erfindung aber auch möglich, das Durchflußrohr im Kreislauf auszubilden, so daß der Ausgangsstoff mehrmals durch den Aufnahme- bzw. Strahlungsraum geführt werden kann. In dem Fall, in dem die Durchflußleitung länger ist als die zweite Strahlungsquelle oder ein zugehöriger Bestrahlungsraum können mehrere erste und/oder zweite Strahlungsquellen bzw. zugehörige Bestrahlungsräume in Durchflußrichtung hintereinander angeordnet sein, so daß der Ausgangsstoff in einem Durchgang leistungsstark bestrahlt und vorzugsweise auch abschließend bestrahlt werden kann, so daß eine weitere Bestrahlung nicht erforderlich ist.

Weitere Merkmale der Erfindung beziehen sich auf eine vorteilhafte Anordnung und Halterung der zweiten Strahlungsquelle im Aufnahmebehälter.

Bei allen erfindungsgemäßen Ausgestaltungen eignet sich eine zweite Strahlungsquelle in Form eines stabförmigen Gasreaktionsrohrs, der zum einen in einen als Durchflußleitung ausgebildeten Bestrahlungsraum stabförmig und dabei vorzugsweise längs hineinragen kann oder in einen topfförmigen Bestrahlungsraum in etwa aufrechter Stellung angeordnet oder von oben stabförmig hineinragen kann. Hierbei läßt sich eine einfache und praktische Halterung verwirklichen, wobei eine kontinuierliche Durchführung oder eine jeweilige Beschickung des Aufnahmebehälters mit dem zu behandelnden Ausgangsstoff in einfacher Weise erfolgen kann.

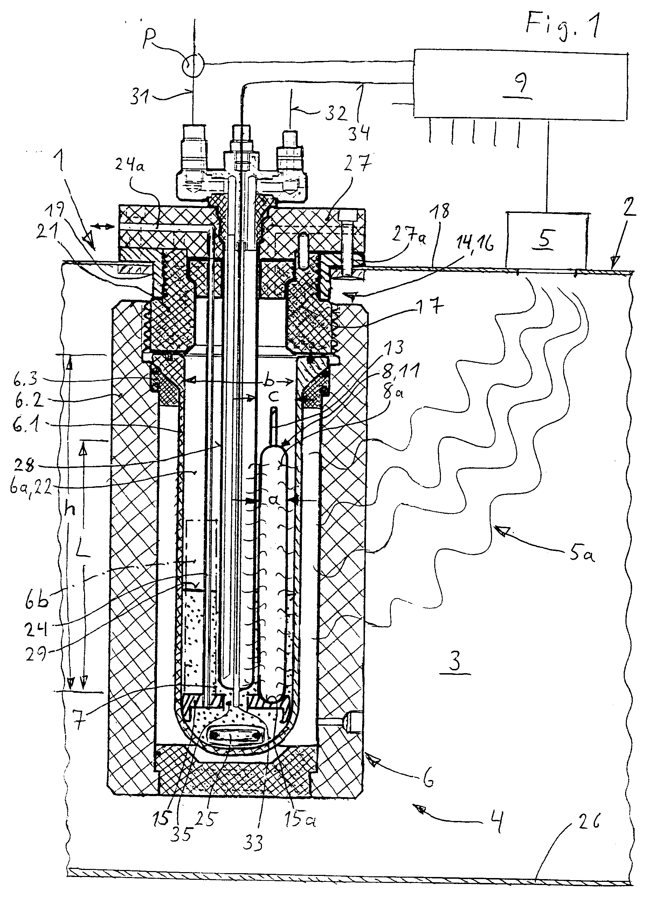

Nachfolgend werden die Erfindung und weitere durch sie erzielbare Vorteile anhand von vereinfachten Zeichnungen und bevorzugten Ausführungsbeispielen näher erläutert. Es zeigen
- Fig. 1: eine erfindungsgemäße Vorrichtung zum Auslösen und/oder Fördern chemischer Prozesse durch Bestrahlung eines Ausgangsstoffs mit elektromagnetischen Wellen in einem topfförmigen Aufnahmebehälter im vertikalen Schnitt;
- Fig. 2: eine erfindungsgemäße Vorrichtung zum Auslösen und/oder Fördern chemischer Prozesse durch Bestrahlen eines Ausgangsstoffs mit elektromagnetischen Wellen in Form einer Durchflußvorrichtung in einem sich längs der Durchflußrichtung erstreckenden Schnitt.

Die Hauptteile der ein Bestrahlungsgerät bildenden Vorrichtung 1 sind ein kastenförmiges Gehäuse 2 aus für Mikrowellen undurchlässigem Material, wie z.B. Metall- oder Stahlblech, das einen ersten Bestrahlungsraum 3 umschließt, der durch eine seitliche, z.B. eine frontseitige, Verschlußtür 4 zugänglich ist, eine erste Strahlungsquelle 5, insbesondere ein Mikrowellengenerator, deren erste Strahlung 5a im ersten Bestrahlungsraum 3 wirksam ist, ein oder mehrere, im ersten Bestrahlungsraum 3 angeordnete topfförmige Aufnahmebehälter 6 mit einem Aufnahmeraum 6a für einen flüssigen oder puderförmigen oder aus kleinen Teilen wie Körnern bestehenden, und zu bestrahlenden Ausgangsstoff 7, eine zweite Strahlungsquelle 8, die im Aufnahmeraum 6a angeordnet ist und eine allgemein mit 9 bezeichnete Steuereinrichtung zur Funktionssteuerung der Vorrichtung 1.

Die erste Strahlungsquelle 5 erzeugt vorzugsweise langwellige elektromagnetische Wellen wie Mikrowellen. Die zweite Strahlungsquelle 8 erzeugt vorzugsweise kurzwellige elektromagnetische Wellen. Es kann sich um eine Plasma-Lichtquelle handeln, die z.B. Infrarotlicht (IR-Licht) oder vorzugsweise ultraviolettes Licht (UV-Licht) erzeugt. Bei der zweiten Strahlungsquelle 8 kann es sich um eine selbständig funktionierende Strahlungsquelle handeln, deren Funktion von der Steuereinrichtung 9 gesteuert wird. Hierzu kann sie durch eine nicht dargestellte Steuerleitung mit der Steuereinrichtung 9 verbunden sein.

Bei der vorliegenden Ausgestaltung ist die zweite Strahlungsquelle 8 eine von der ersten Strahlungsquelle 5 abhängig funktionierende Strahlungsquelle. Vorzugsweise wird die zweite Strahlung 8a der zweiten Strahlungsquelle 8 durch die erste Strahlung 5a der ersten Strahlungsquelle 5 angeregt. Bei der vorliegenden Ausgestaltung ist die zweite Strahlungsquelle 8 durch einen Gasreaktionskörper 11 aus für die erste und die zweite Strahlung 5a, 8a durchlässigem Material, wie z.B. Kunststoff, Keramik, Glas oder Quarz, gebildet, und sie enthält bei Unterdruck ein Gas, das bei Bestrahlung mit den elektromagnetischen Wellen der ersten Strahlung 5a angeregt wird zur Emission einer auf den Ausgangsstoff einwirkenden kurzwelligeren Strahlung, die Bindungsspaltungen und/oder Bindungsbildungen im Ausgangsstoff bewirkt. Zur Füllung des Gasreaktionskörpers 11 eignet sich ein Gas, das sich für eine Abgabe von IR-Licht oder sichtbarem Licht oder vorzugsweise UV-Licht eignet. Die Gasfüllung kann Edelgas mit oder ohne Quecksilberzusatz oder Stickstoff enthalten. Die horizontale Außenquerschnittsgröße des Gasreaktionskörpers 11 ist kleiner bemessen, als die Innenquerschnittsgröße des Aufnahmebehälters 6, so daß dazwischen ein Abstand bzw. Ringspalt besteht. Der Gasreaktionskörper 11 kann im und/oder oberhalb des Ausgangsstoffs 7 oder Aufnahmebehälters 6 angeordnet sein oder so angeordnet sein, daß er in den Ausgangsstoff 7 hineintaucht und mit einem Abschnitt, vorzugsweise mit etwa einer Hälfte, aus dem Ausgangsstoff 7 oder auch aus dem Aufnahmebehälter 6 nach oben herausragt.

Vorzugsweise ist der Gasreaktionskörper 11 ein stabförmiges Teil vorzugsweise runder Querschnittsform, das sich insbesondere gerade erstreckt, und dessen Querschnittsgröße a vorzugsweise kleiner ist als die halbe Innenquerschnittsabmessung b des Aufnahmebehälters 6 oder ein Abstand c zwischen der Innenwandung des Aufnahmebehälters 6 und eines darin vorzugsweise zentral angeordneten und noch zu beschreibenden Kühlkörpers. Diese Ausgestaltung ermöglicht es, zwei oder mehrere Gasreaktionskörper 11 vorzugsweise gleicher Ausgestaltung im Aufnahmeraum 6a anzuordnen, wenn dies zwecks Erreichung einer angestrebten Strahlungsleistung oder gleichmäßigen Bestrahlung gewünscht ist. Deshalb sind der Vorrichtung 1 vorzugsweise zwei oder mehrere Gasreaktionskörper 11 insbesonderer gleicher Ausgestaltung zugeordnet. Bei der vorliegenden Ausgestaltung sind der oder die Gasreaktionskörper 11 durch hohlzylindrische Rohre aus für Mikrowellen durchlässigem Material, z.B. Glas, Quarz, Kunststoff oder Keramik, gebildet, deren Enden vorzugsweise halbkreisförmig konvex gerundet sind und Unterdruck enthalten. Mit 13 ist ein Rohrstutzen an einem Ende des Rohres bezeichnet, bei dem es sich um einen Saugstutzen handelt, an dem zur Erzeugung des Unterdrucks im Gasreaktionskörper 11 bei dessen Herstellung gesaugt werden kann, wonach der Rohrstutzen 13 verschlossen wird, z.B. durch Schweißen bzw. Verschmelzen. Bei der vorliegenden Ausgestaltung ist die aufrechte Länge L des rohrförmigen Gasreaktionskörpers 11 kleiner bemessen als die zur Verfügung stehende Innenhöhe h im Aufnahmebehälter 6, so daß der Gasreaktionskörper 11 problemlos in den Aufnahmebehälter 6 paßt. Dies gilt insbesondere für einen durch einen lösbaren Deckel 14 geschlossenen Behälter 6. Bei einem offenen Aufnahmebehälter 6 kann der Gasreaktionskörper 11 nach oben aus dem Aufnahmebehälter 6 herausragen.

Zur Positionierung des Gasreaktionskörpers 11 im Aufnahmebehälter 6 ist es vorteilhaft, einen Halter 15 im Aufnahmebehälter 6 anzuordnen, auf dem der Gasreaktionskörper 11 gestellt ist oder vorzugsweise in seiner aufrechten Stellung formschlüssig gehalten ist.

Um im Aufnahmebehälter 6 unterschiedliche Ausgangsstoffe 7 zugleich bestrahlen zu können, ist es vorteilhaft, zwei oder mehrere topfförmige und andeutungsweise dargestellte Innenaufnahmebehälter 6b vorzusehen, die in den Aufnahmebehälter 6 nebeneinander einstellbar sind, z.B. in eine auf einem Teilkreis verteilte Position. Um dies zu ermöglichen, muß die horizontale Querschnittsgröße der vorzugsweise gleichen Innenbehälter kleiner sein, als die Hälfte der horizontalen Innenquerschnittsgröße b oder kleiner als c. Dabei ist es vorteilhaft, den Halter 15 so auszubilden, so daß der oder die Innenaufnahmebehälter 6b auf ihn aufstellbar sind und der Halter 15 den oder die Innenaufnahmebehälter 6b in einer aufrechten Position formschlüssig hält. Dabei ist es vorteilhaft, die horizontale Querschnittsgröße und -form des oder der Innenaufnahmebehälter 6b und des oder der Gasreaktionskörper 11 gleich auszubilden, so daß ein Innenaufnahmebehälter 6b oder ein Gasreaktionskörper 11 auf einen zugehörigen Anordnungs- bzw. Standplatz paßt. Hierfür kann jeweils ein Steckloch 15a im Halter 15 vorgesehen sein. Dabei ist es z.B. möglich und vorteilhaft, Innenbehälter 6b und Gasreaktionskörper 11 abwechselnd auf einem Teilkreis anzuordnen.

Auch für den Aufnahmebehälter 6 ist vorzugsweise ein Halter 16 zum Halten im ersten Bestrahlungsraum 3 vorgesehen. Bei der vorliegenden Ausgestaltung ist der Aufnahmebehälter 6 in hängender Position angeordnet, wobei der Halter 16 mit dem Deckel 14 verbunden ist oder von letzterem gebildet ist und der Aufnahmebehälter 6 von unten mit dem Deckel 14 verbindbar ist, hier durch eine Schraubverbindung 17. Es ist auch vorteilhaft, den Deckel 14 an der Deckenwand 18 des Gehäuses 2 anzuordnen, so daß die Deckenwand 18 die Funktion des Halters 16 erfüllen kann und letzterer durch die durch die Deckenwand 18 gebildet ist. Bei der vorliegenden Ausgestaltungen weist die Deckenwand 18 ein Loch 19 auf, in das der Deckel 14 mit einem verjüngten Verbindungsrohrstutzen 21 einfaßt, wobei der hohlzylindrische Aufnahmebehälter 6 mit dem Verbindungsrohrstutzen 21 verbindbar ist, insbesondere durch ein Gewinde an beiden Teilen verschraubbar ist. Bei der vorliegenden Ausgestaltung weist der Verbindungsrohrstutzen 21 ein Außengewinde auf, auf das der Aufnahmebehälter 6 mit einem an seinem oberen Randbereich angeordneten Innengewinde aufschraubbar ist.

Der Aufnahmebehälter 6 besteht aus wenigstens für die erste Strahlung 5a durchlässigem Material, wie Kunststoff, Keramik, Glas oder Quarz, so daß die erste Strahlung 5a in den Innenbestrahlungsraum 22 im Aufnahmebehälter 6 gelangt. Bei einem für Behandlungen unter Überdruck und durch einen Deckel verschließbaren Aufnahmebehälter 6 ist es vorteilhaft, den Boden des Aufnahmebehälters 6 außen oder außen und innen halbkreisförmig zu runden. Um eine einfache und kostengünstig herstellbare sowie korrosionsfeste Bauweise für den Aufnahmebehälter 6 zu gewährleisten ist dieser doppelwandig ausgebildet mit einem Innentopf 6.1 aus sehr korrosionsfestem Material, insbesondere aus Glas oder Kunststoff, wie z.B. PTFE, und einem Außen- oder Druckmantel 6.2. Der Innentopf 6.1 kann einen Flansch mit einer unterseitigen kegelförmigen Auflagefläche aufweisen, die auf einem entsprechend geformten Tragring 6.3 aufliegen kann, der auf einer Schulterfläche des Außen- oder Druckmantels 6.2 aufliegt.

Der Halter 15 kann im Sinne eines Hängekorbs ausgebildet sein, der durch wenigstens eine oder zwei bzw. drei einander gegenüberliegende Haltestangen 24 mit dem Deckel 14 verbunden sein kann. Hierdurch sind wenigstens ein bereits erwähnter Innenaufnahmebehälter 6b und wenigstens ein Gasreaktionskörper 11 im demontieren Zustand des Aufnahmebehälters 6 in hängender Position des Halters 15 handhabungsfreundlich von außen nach innen einstellbar und von innen nach außen entnehmbar. Wenigstens eine Haltestange 24 kann als Rohr ausgebildet sein, das im Bereich des Deckels 14 durch einen nach außen führenden Kanal 24a verbunden ist, der mit einer Vorrichtung (nicht dargestellt) zum Füllen oder Absaugen von fließfähigem Material, hier z. B. der Ausgangsstoff 7, verbunden sein kann.

Im unteren Bereich des Aufnahmebehälters 6 kann ein Rührer 25 angeordnet sein, der durch einen elektromagnetischen Antrieb um die vertikale Längsachse drehbar ist, der unter der Bodenwand 26 des Gehäuses 2 angeordnet sein kann, wie es an sich bekannt ist.

Bei der vorliegenden Ausgestaltung, bei der der Deckel 14 mit dem Gehäuse 2 verbunden ist, können die mit dem Gehäuse 2 verbundenen und auf dessen elektrischen Potential liegenden Teile aus Metall bestehen, z.B. das auf der Deckenwand 18 aufliegende Oberteil 27 des Deckels 14 oder ein damit verschraubter Ringflansch 27a. Der Halter 15 und die wenigstens eine Haltestange 24 bestehen vorzugsweise aus für die Bestrahlungen durchlässigem Material wie insbesondere Kunststoff. Dies gilt auch für alle anderen Teile des Aufnahmebehälters 6, wie z. B. den Innenaufnahmebehälter 6b, den Innentopf 6.1 und den Druckmantel 6.2, die im Funktionsbetrieb nicht erwärmen sollen.

Die Leistung der ersten Strahlenquelle 5 ist durch die Steuereinrichtung 9 vorzugsweise verringerbar und vergrößerbar. Für eine Bestrahlung des Ausgangsstoffs 7 ohne Erwärmung wird die Leistung in etwa nur so groß eingestellt, daß sie bzw. ein Großteil dieser ersten Strahlung 5a von der zweiten Bestrahlungsquelle 8 absorbiert wird und deshalb die erste Strahlung 5a den Ausgangsstoff 7, der strahlungsabsorbierend sein kann oder nicht, nicht oder nur in einem vernachlässigbaren Maß oder nur geringfügig zu erwärmen vermag. Hierdurch können auch Ausgangsstoffe 7 behandelt werden, die wärmeempfindlich sind, oder bei denen die Behandlung etwa bei Normaltemperatur bzw. Raumtemperatur stattfinden soll. Bei Behandlungen des Ausgangsstoffs 7, bei denen eine Temperaturerhöhung stattfinden kann oder soll, wird die Leistung der ersten Strahlungsquelle 5 entsprechend erhöht, so daß der Ausgangsstoff 7 von beiden Strahlungsquellen 5, 8 bestrahlt wird und aufgrund der Bestrahlung durch die erste Strahlung 5a mehr als nur geringfügig, z.B. auch so stark erwärmt werden kann, daß sich im Aufnahmebehälter 6 ein wesentlicher Überdruck einstellt und eine Reaktion darin bei Überdruck und bei erhöhter Temperatur stattfinden kann.

In Fällen, in denen es erwünscht ist, die Temperatur im Ausgangsstoff 7 zu begrenzen oder zu kühlen, ist es vorteilhaft, eine Kühlvorrichtung für den Ausgangsstoff 7 vorzusehen, hier in Form eines bereits erwähnten Kühlfingers 28, der am Deckel 14 gehalten ist und sich nach unten über das Niveau 29 für den Ausgangsstoff 7 hinaus erstreckt und somit in den Ausgangsstoff 7 im Funktionsbetrieb eintaucht. Der Kühlfinger 28 ist im Bereich des Deckels 14 mit einer Zu- und Abführungsleitung 31, 32 verbunden, die Teile eines nicht dargestellten Kühlmittelkreislaufs sind, in dem eine Pumpe P oder dgl. angeschlossen ist. Als Kühlmittel kann ein Gas oder eine Flüssigkeit, z.B. Luft oder Wasser dienen.

Vorzugsweise ist ein Temperaturfühler 33 vorgesehen, mit dem die Temperatur im Ausgangsstoff 7 meßbar ist, und der durch eine Signalleitung 34 mit der Steuereinrichtung 9 verbunden ist. Vorzugsweise ist der Temperaturfühler im unteren Endbereich des Kühlfingers 28 angeordnet, wobei die Signalleitung 34 sich nach oben längs durch den Kühlfinger 28 erstreckt und außenseitig vom Deckel 14 aus der Deckelanordnung ausmünden kann. Vorzugsweise übetragt der Thermofühler 33 den Kühlfinger 28 nach unten. Wie bereits der Kühlfinger 28 ist auch der Thermofühler 33 vorzugsweise zentral im Aufnahmebehälter 6 angeordnet. Der Kühlfinger 28 oder der Thermofühler 33 kann in einem vorzugsweise zentralen Loch 35 im Halter 15 angeordnet sein oder sich mit einem Umfangsabstand durch das Loch 35 hindurch erstrecken.

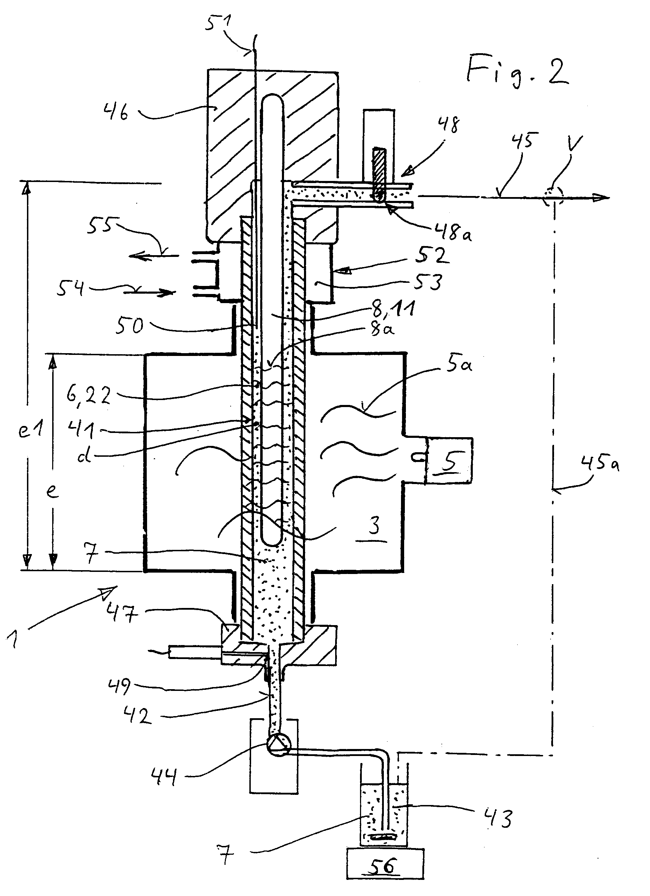

Das Ausführungsbeispiel nach Fig. 2, bei dem gleiche oder vergleichbare Teile mit gleichen Bezugszeichen versehen sind, unterscheidet sich vom vorbeschriebenen Ausführungsbeispiel dadurch, das der Aufnahmebehälter 6 bzw. der Innenbestrahlungsraum 22 durch ein sich vorzugsweise gerade erstreckendes Durchflußrohr 41 aus für wenigstens die erste Strahlung 5a durchlässigem Material wie z.B. Kunststoff, Glas, Quarz oder Keramik gebildet ist, das einen Aufnahmeraum 6a umschließt und den ersten Bestrahlungsraum 3 vorzugsweise etwa vertikal durchsetzt. Durch das Durchflußrohr 41 ist der flüssige oder rieselfähige Ausgangsstoff 7 durch eine Fördereinrichtung längs durch das Durchflußrohr 41 förderbar, vorzugsweise von unten nach oben. Bei der vorliegenden Ausgestaltung ist das Durchflußrohr 41 stromauf des ersten Bestrahlungsraums 3 mit einer Zuführungsleitung 42 verbunden, die sich von einem Vortatsbehälter 43 zum unteren Endbereich des Durchflußrohrs 41 erstreckt und in der eine Pumpe 44 angeordnet ist.

Im Durchflußrohr 41 ist vorzugsweise in zentraler Position der vorzugsweise stangenförmige Gasreaktionskörper 11 angeordnet, wobei er an seinem unteren Ende oder an seinem oberen Ende gehalten sein kann. Bei der vorliegenden Ausgestaltung weisen das Durchflußrohr 41 und der Gasreaktionskörper 11 eine runde Querschnittsform auf, wobei der dazwischen befindliche Abstand d bzw. Ringraum unterschiedlich bemessen und vorzugsweise mit einer kleinen Abmessung von z.B. weniger als etwa ein bis drei mm bemessen werden kann. In einem solchen Fall liegt der zu bestrahlende Ausgangsstoff 7 im Bereich der zweiten Strahlenquelle 8 in Form eines Films bzw. einer dünnen Schicht vor, der bzw. die die zweite Strahlungsquelle 8 umgibt, wobei letztere im direkten Kontakt mit dem Ausgangsstoff 7 steht. Hierdurch ist sowohl beim Vorhandensein eines verhältnismäßig großen Abstands d als auch vorzugsweise kleinen Abstands d eine leistungsfähige Bestrahlung des Ausgangsstoffs 7 mit der zweiten Strahlung 8a und gegebenenfalls auch mit der ersten Strahlung 5a möglich. Die Länge der Bestrahlungszone e kann durch eine entsprechende Abmessung des ersten Bestrahlungsraums 3 bestimmt werden, oder es können auch mehrere erste Strahlungsräume 3 nacheinander angeordnet sein, so daß der Ausgangsstoff 7 in einem Durchgang hinreichend bestrahlt werden kann. Wie die Fig. 2 auch zeigt, können das Durchflußrohr 41 und die zweite Strahlungsquelle 8 länger bemessen sein als der Bestrahlungsraum 3, siehe Länge e1.

Es ist im Rahmen der Erfindung auch möglich, eine Abführungsleitung 45 mit der Zuführungsleitung 42 oder mit dem Vorratsbehälter 43 zu verbinden, so daß ein Teil des Ausgangsstoffs 7 oder dieser insgesamt im Kreislauf gefördert und mehrmals bestrahlt werden kann. Dies ist durch eine andeutungsweise dargestellte Rückführungsleitung 45a verdeutlicht, die von einem Schalt- oder Mengen-Steuerventilteil V in der Abführungsleitung 45 ausgeht.

Bei der vorliegenden Ausgestaltung ist das Durchflußrohr 41 zu beiden Seiten des Gehäuses 2 des ersten Bestrahlungsraums 3 mit Halteteilen 46 und 47 verbunden, an die Zuführungs- und Abführungsleitungen 42,45 angeschlossen sind. Einer dieser Anschlüsse, hier der Abführungsanschluß ist seitlich angeordnet. Der vorzugsweise gerade und zylindrisch ausgebildete stangenförmige Gasreaktionskörper 11 ist vorzugsweise im oberen Halteteil 46 gehalten, insbesondere mittels einer Steckverbindung. Zur Einstellung eines konstanten oder zur Vergrößerung oder zur Verkleinerung des Druckes im Bereich des Durchflußrohrs 41 ist ein Druckeinstellventil 48 hinter dem Bestrahlungsraum 22, vorzugsweise in der Abführungsleitung 45 angeordnet. Hierbei kann es sich um ein Proportionalventil handeln, das einen konstanten Druck im Bestrahlungsraum 22 einstellt. Es eignet sich auch ein Druckbegrenzungsventil.

Zur Anzeige des vorhandenen Druckes kann ein Drucksensor 49 vorgesehen sein, der bei der vorliegenden Ausgestaltung im Bereich des Halteteils 47 angeordnet ist, insbesondere zwischen der Pumpe 44 und dem Durchflußrohr 41.

Es ist auch ein Temperatursensor 50 vorhanden, mit dem die Temperatur im Ausgangsstoff im Bestrahlungsraum 3 oder 22 ermittelt werden kann. Bei der vorliegenden Ausgestaltung ist der Temperatursensor 50 im Ringspalt zwischen dem Gasreaktionskörper 11 und dem Durchflußrohr 41 angeordnet und durch eine sich nach oben erstreckende Signalleitung 51 mit der Steuereinrichtung 9 verbunden. Es ist auch eine Kühlvorrichtung 52 für den bestrahlenden Ausgangsstoff 7 vorgesehen, die vorzugsweise in Durchgangsrichtung nach dem ersten Bestrahlungsraum 3 angeordnet ist, insbesondere auch hinter dem Temperatursensor 50. Die Kühlvorrichtung 52 ist durch ein hohlzylindrisches Mantelstück 53 gebildet, dessen Hohlraum mit einer Zuführungsleitung 54 und einer Abführungsleitung 55 für ein Kühlmittel, z.B. Wasser, verbunden oder verbindbar ist und das Durchflußrohr 41 unmittelbar umgibt.

Für einen Bestrahlungsvorgang werden die Pumpe 44 und die erste Strahlenquelle 5 und somit auch die zweite Strahlungsquelle 8 eingeschaltet, wobei vorzugsweise eine Pumpe 44 mit wahlweise verringerbarer oder vergrößerbarer Fördermenge verwendet wird, so daß auch oder nur hierdurch durch eine Einstellung der Fördermenge der Pumpe 44 die Strömungsgeschwindigkeit des flüssigen oder rieselfähigen gegebenenfalls auch gasförmigen Ausgangsstoff 7 im Durchflußrohr 41 und somit auch die Bestrahlungszeit bestimmt werden können. Sofern im Ausgangsstoff im Bereich des Bestrahlungsraum 3 ein Überdruck herrschen soll, wird das vorzugsweise einstellbare Druckventil eingeschaltet, das die Größe einer Drossel 48a einstellt, die den Druck im Ausgangsstoff 7 stromauf der Drossel 48a und auch die Strömungsgeschwindigkeit bestimmt.

Der Ausgangsstoff 7 kann im bereits beim ersten Ausführungsbeispiel beschriebenen Sinne je nach der Einstellung der Leistung der ersten Strahlungsquelle 5 nur mit der zweiten Strahlung 8a oder auch mit der ersten Strahlung 5a bestrahlt werden. Dem Ausgangsstoff 7 bzw. Reaktionsgemisch kann eine Heizvorrichtung 56 zur Vorheizung zugeordnet sein, die vorzugsweise stromauf der Pumpe 44 angeordnet ist. Hierbei kann es sich um eine Heizvorrichtung 56 handeln, die in einen den Vorratsbehälter 43 tragenden Sockel integriert ist.

## Patentansprüche

1. Vorrichtung zum Auslösen und/oder Fördern chemischer Prozesse durch Bestrahlung eines Ausgangsstoffs (7) mit elektromagnetischen Wellen, mit
- wenigstens einem von einer Wandung umgebenen Aufnahmeraum (6a) für den Ausgangsstoff (7),
- einer ersten Strahlungsquelle (5), die den Aufnahmeraum (6) mit einer vorzugsweise langwellige elektromagnetische Wellen aufweisenden ersten Strahlung (5a) bestrahlt,
- einer zweiten Strahlungsquelle (8), die den Aufnahmeraum (6a) mit einer kurzwellige elektromagnetische Wellen enthaltenden zweiten Strahlung (8a) bestrahlt,
- und einer elektrischen Steuereinrichtung zum Steuern der Vorrichtung (1),
**dadurch gekennzeichnet,**
daß die zweite Strahlungsquelle (8) im Aufnahmeraum (6a) angeordnet ist.

2. Vorrichtung nach Anspruch 1,
**dadurch gekennzeichnet,**
daß die zweite Strahlungsquelle (8) teilweise oder vollständig im Aufnahmeraum (6a) oder im Ausgangsstoff (7) angeordnet ist.

3. Vorrichtung nach Anspruch 1 oder 2,
**dadurch gekennzeichnet,**
daß die zweite Strahlungsquelle (8) einen kompakten oder stabförmigen Strahlungshohlkörper (10) vorzugsweise runder Querschnittsform aufweist.

4. Vorrichtung nach Anspruch 1 oder 2,
**dadurch gekennzeichnet,**
daß die zweite Strahlungsquelle (8) ein Gasreaktionshohlkörper (11) ist, der mit einem Gas bei Unterdruck gefüllt ist, das bei Bestrahlung mit den elektromagnetischen Wellen entsprechender Energie der ersten Strahlungsquelle (5) angeregt wird zur Emission einer auf den Ausgangsstoff (7) einwirkenden kurzwelligeren Strahlung (8a), die Bindungsspaltungen und/oder Bindungsbildungen im Ausgangsstoff bewirkt.

5. Vorrichtung nach Anspruch 4,
**dadurch gekennzeichnet,**
daß der Gasreaktionshohlkörper (11) mit einem zur Emission von UR-Licht, sichtbarem Licht oder vorzugsweise UV-Licht geeignetem Gas gefüllt ist.

6. Vorrichtung nach einem der vorhergehenden Ansprüche,
**dadurch gekennzeichnet,**
daß die horizontale Querschnittsabmessung (a) der zweiten Strahlungsquelle (8) kleiner ist als die halbe horizontale Querschnittsabmessung (b) des Aufnahmeraums (6a).

7. Vorrichtung nach einem der vorherigen Ansprüche,
**dadurch gekennzeichnet,**
daß der Aufnahmeraum (6a) in einem topfförmigen Aufnahmebehälter (6) aus für die erste Strahlung (5a) und vorzugsweise auch für die zweite Strahlung (8a) durchlässigem Material angeordnet ist.

8. Vorrichtung nach Anspruch 7,
**dadurch gekennzeichnet,**
daß der Aufnahmebehälter (6) durch eine Verschlußvorrichtung mit einem Deckel (14) lösbar verschließbar ist.

9. Vorrichtung nach Anspruch 8,
**dadurch gekennzeichnet,**
daß der Deckel (14) an der Deckenwand (18) eines einen ersten Bestrahlungsraum (3) begrenzenden Gehäuses (2) angeordnet ist.

10. Vorrichtung nach Anspruch 8 oder 9,
**dadurch gekennzeichnet,**
daß der Aufnahmebehälter (6) und der Deckel (14) durch eine Schraubverbindung miteinander verbindbar sind.

11. Vorrichtung nach einem der vorherigen Ansprüche 1 bis 6,
**dadurch gekennzeichnet,**
daß der Aufnahmeraum (6a) durch ein Durchflußrohr (41) für den Ausgangsstoff (7) gebildet ist, das mit einer Zuführungsleitung (31) und einer Abführungsleitung (32) für den Ausgangsstoff (7) verbunden ist, wobei eine Fördervorrichtung, insbesondere eine Pumpe (44) zum Fördern des Ausgangsstoffs (7) in den Leitungen (31, 32, 41) vorgesehen ist.

12. Vorrichtung nach Anspruch 11,
d**adurch gekennzeichnet,**
daß die auf dem Umfang vorzugsweise gleiche Abmessung des die zweite Strahlungsquelle (8) umgebenden Ringraumes kleiner ist als etwa 5 mm, insbesondere kleiner als 2 bis 3 mm, vorzugsweise kleiner ist als etwa 1 mm ist.

13. Vorrichtung nach Anspruch 11 oder 12,
**dadurch gekennzeichnet,**
daß die Zuführungsleitung (31) und die Abführungsleitung (32) durch eine Rückführungsleitung (45a) für einen teilweisen oder vollständigen Rückfluß des bestrahlten Ausgangsstoffs (7) miteinander verbunden sind.

14. Vorrichtung nach einem der vorherigen Ansprüche,
**dadurch gekennzeichnet,**
daß eine Kühlvorrichtung (28; 52) zum Kühlen des Ausgangsstoffs (7) im Bereich der ersten Strahlung (5a) oder stromab davon vorgesehen ist.

15. Vorrichtung nach einem der vorherigen Ansprüche,
**dadurch gekennzeichnet,**
daß ein Temperatursensor (33; 49) vorgesehen ist, zum Messen der Temperatur im Ausgangsstoff (7) im Bereich des Aufnahmeraums (6a) oder stromab davon.
